# EUROPEAN PATENT SPECIFICATION

(11) **EP 2 362 953 B1**
(45) Date of publication and mention of the grant of the patent: **09.08.2017**
(21) Application number: 10717570.5
(22) Date of filing: 01.04.2010
(51) Int. Cl.: G06F 9/48, G06F 1/32

(54) **MULTIPROCESSOR COMPUTING DEVICE**
COMPUTERVORRICHTUNG MIT MEHREREN PROZESSOREN
DISPOSITIF INFORMATIQUE MULTIPROCESSEUR

(30) Priority: 14.04.2009 US 410893
(43) Date of publication of application: 07.09.2011
(73) Proprietor: International Business Machines Corporation, Armonk, NY 10504 (US)
(72) Inventor: YU, Jessie, Poughkeepsie, New York 12601 (US); DOW, Eli, Poughkeepsie, New York 12601-5400 (US); LASER, Marie, Poughkeepsie, New York 12601-5400 (US)
(74) Representative: Gascoyne, Belinda Jane
(86) International application number: PCT/EP2010/054440
(87) International publication number: WO 2010/118966

(56) References cited:
- WO-A1-2007/081218
- US-A1- 2004 003 309
- US-A1- 2008 229 125
- US-B1- 6 247 025

## Description

### Technical Field

The present invention relates to computing devices, and more specifically, to reducing power consumption during operation of computing devices.

### Background of the Invention

To reduce power consumption, modem processors in computing devices are generally designed to go into deep C-state sleep while idling and wake up when an interrupt takes place. For example, the "C3-state" (often known as "Sleep") is a state where the processor does not need to keep its cache coherent, but maintains other state information. Some processors have variations on the C3 state (Deep Sleep, Deeper Sleep, etc.) that differ in how long it takes to wake the processor. However, a process that would normally demonstrate spinlock acquisition behaviors could negatively impact this power saving mechanism due to the decrease in sleep state residency, or prevention of entering sleep states, as well as increasing the energy cost associated with state transitions.

Spinlock processes are an example of a process that prevents a processor from going into deep C-state sleep. A spinlock is a lock where the requesting thread simply waits in a loop ("spins") repeatedly checking until the lock becomes available. As the thread remains active but isn't performing a useful task, the use of such a lock is a kind of "busy waiting." Once acquired, spinlocks will usually be held until they are explicitly released, although in some implementations they may be automatically released if the thread blocks, or "goes to sleep". Spinlocks are efficient if threads are only likely to be blocked for a short period of time, as they avoid overhead from operating system process re-scheduling or context switching. For this reason, spinlocks are often used inside operating system kernels. However, spinlocks become wasteful if held for longer durations as they may prevent other threads from running and require re-scheduling. The longer a lock is held by a thread, the greater the risk it will be interrupted by the operating system (O/S) scheduler while holding the lock. If this happens, other threads will be left "spinning" (repeatedly trying to acquire the lock), while the thread holding the lock is not making progress towards releasing it. The result is a semi-deadlock until the thread holding the lock can finish and release it. This is especially true on a single-processor system, where each waiting thread of the same priority is likely to waste its quantum (allocated time where a thread can run - also referred to as a timeslice herein) spinning until the thread that holds the lock is finally finished.

US Patent Application Publication number US 2004/0003309 A1 (Zhong-Ning Cai, et al. "Techniques for Utilization of Asymmetric Secondary Processing Resources"), published 1 January 2004, discloses switching logic that switches execution from a first processing resource to a second processing resource in a reduced power consumption mode.

### Summary of the Invention

According to one embodiment of the present invention, a computing device including a first processor configured to operate at a first speed and consume a first amount power and a second processor configured to operate at a second speed and consume a second amount of power, wherein the first speed is greater than the second speed and the first amount of power is greater than the second amount of power is provided. The computing device of this embodiment also comprises a scheduler configured to assign processes to the first processor only if the processes utilizes their entire timeslice.

Another embodiment of the present invention is directed to a method of assigning processes to a first processor or a second processor in a multiprocessor computing device. The method of this embodiment comprises ascertaining that the first processor operates faster and consumes more power than the second processor; determining whether a process is now or continues to operate as a spinlock process, a process with a sleeper bonus, or another type of process; and assigning the process to the second processor in the event that the process is a spinlock process or a process with a sleeper bonus, otherwise, assigning the process to the first processor.

Viewed from another aspect the present invention provides a system program comprising computer code to, when loaded into a computer system and executed thereon, cause said computer system to perform all of the steps of the invention.

Additional features and advantages are realized through the techniques of the present invention. Other embodiments and aspects of the invention are described in detail herein and are considered a part of the claimed invention. For a better understanding of the invention with the advantages and the features, refer to the description and to the drawings. The invention is defined by the appended claims.

### Brief Description of the Drawings

The present invention will now be described, by way of example only, with reference to preferred embodiments, as illustrated in the following figures:
Fig. 1 shows an example of a computing device on which embodiments of the present invention may be implemented;
Fig. 2 shows a computing device including two processors according to one embodiment of the present invention; and
Fig. 3 shows a method of assigning processes to particular processors according one embodiment of the present invention.

### Detailed Description of the Invention

Embodiments of the present invention may achieve reduced power reduction by implementing a slower, low-voltage dedicated processor with the main processor(s) for sleeper and/or spinlock processes. It should be apparent to those skilled in the art that in this context the term processor may also be used to mean a particular core of a multicore processor architecture that implements asymmetric function or power consumption characteristics with respect to those cores. The main processor(s) may be reserved for only processes that are central processing unit (CPU) bound and use their entire timeslices. This way the main processor(s) would be more likely to remain in one state and therefore maximizing the full benefits of the power saving of allowing the main processor(s) to go into a deep-C sleep state. To this end, it should be understood that the secondary processor may, in one embodiment, operate at a lower voltage than the main processor(s). As a result, the secondary processor may operate at a slower speed.

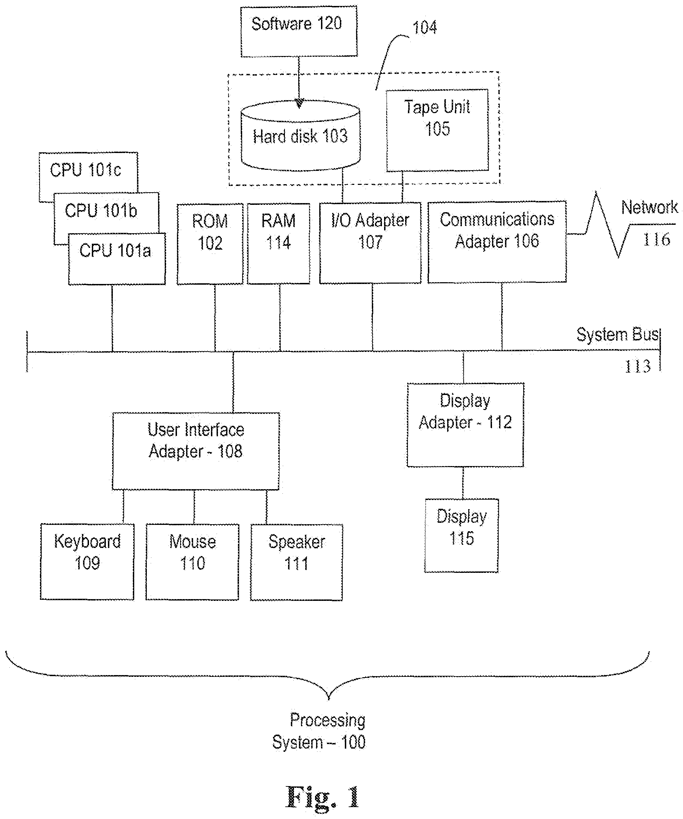

Referring to Fig. 1, there is shown an embodiment of a processing system 100 for implementing the teachings herein. In this embodiment, the system 100 has one or more central processing units (processors) 101a, 101b, 101c, etc. (collectively or generically referred to as processor(s) 101). In one embodiment, each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

Fig. 1 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. A network adapter 106 interconnects bus 113 with an outside network 116 enabling data processing system 100 to communicate with other such systems. A screen (e.g., a display monitor) 115 is connected to system bus 113 by display adaptor 112, which may include a graphics adapter to improve the performance of graphics intensive applications and a video controller. In one embodiment, adapters 107, 106, and 112 may be connected to one or more I/O busses that are connected to system bus 113 via an intermediate bus bridge (not shown). Suitable I/O buses for connecting peripheral devices such as hard disk controllers, network adapters, and graphics adapters typically include common protocols, such as the Peripheral Components Interface (PCI). Additional input/output devices are shown as connected to system bus 113 via user interface adapter 108 and display adapter 112. A keyboard 109, mouse 110, and speaker 111 all interconnected to bus 113 via user interface adapter 108, which may include, for example, a Super I/O chip integrating multiple device adapters into a single integrated circuit.

Thus, as configured in Fig. 1, the system 100 comprises processing means in the form of processors 101, storage means including system memory 114 and mass storage 104, input means such as keyboard 109 and mouse 110, and output means including speaker 111 and display 115. In one embodiment, a portion of system memory 114 and mass storage 104 collectively store an operating system such as the AIX® operating system from IBM® to coordinate the functions of the various components shown in Fig 1. IBM, and AIX are registered trademarks of International Business Machines Corporation in the United States, other countries, or both.

It will be appreciated that the system 100 can be any suitable computer or computing platform, and may include a terminal, wireless device, information appliance, device, workstation, mini-computer, mainframe computer, personal digital assistant (PDA) or other computing device. It shall be understood that the system 100 may include multiple computing devices linked together by a communication network. For example, there may exist a client-server relationship between two systems and processing may be split between the two.

Examples of operating systems that may be supported by the system 100 include Microsoft® Windows Vista®, Mac OS®, Java, AIX, LINUX®, and UNIX®, or any other suitable operating system. Microsoft, Windows, Windows NT, and the Windows logo are trademarks of Microsoft Corporation in the United States, other countries, or both. Mac OS is a trademark of Apple Inc., registered in the U.S. and other countries. Java and all Java-based trademarks and logos are trademarks of Sun Microsystems, Inc. in the United States, other countries, or both. Linux is a registered trademark of Linus Torvalds in the United States, other countries, or both. UNIX is a registered trademark of The Open Group in the United States and other countries. The system 100 also comprises a network interface 106 for communicating over a network 116. The network 116 can be a local-area network (LAN), a metro-area network (MAN), or wide-area network (WAN), such as the Internet or World Wide Web.

Users of the system 100 can connect to the network through any suitable network interface 116 connection, such as standard telephone lines, digital subscriber line, LAN or WAN links (e.g., T1, T3), broadband connections (Frame Relay, asynchronous transfer mode (ATM)), and wireless connections (e.g., 802.11(a), 802.11(b), 802.11(g)).

As disclosed herein, the system 100 comprises machine-readable instructions stored on machine readable media (for example, the hard disk 104) for capture and interactive display of information shown on the screen 115 of a user. As discussed herein, the instructions are referred to as "software" 120. The software 120 may be produced using software development tools as are known in the art. The software 120 may include various tools and features for providing user interaction capabilities as are known in the art.

In some embodiments, the software 120 is provided as an overlay to another program. For example, the software 120 may be provided as an "add-in" to an application (or operating system). Note that the term "add-in" generally refers to supplemental program code as is known in the art. In such embodiments, the software 120 may replace structures or objects of the application or operating system with which it cooperates.

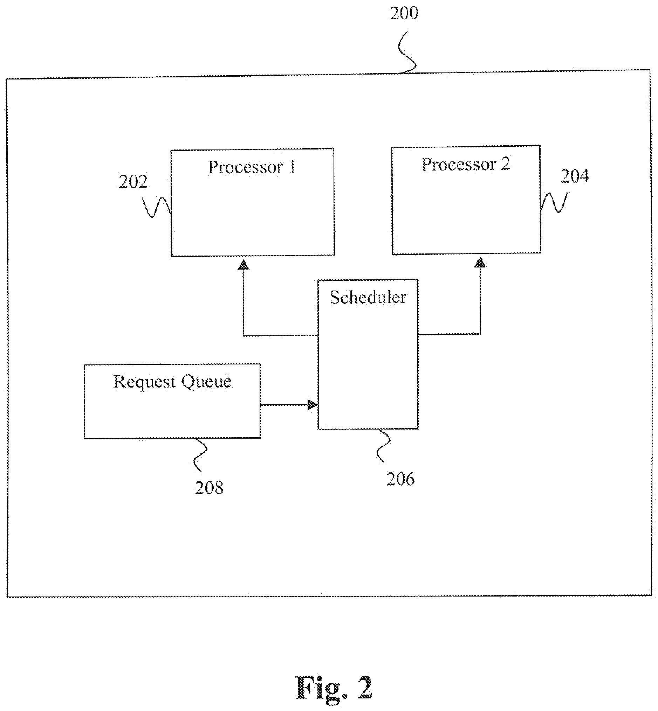

Fig. 2 shows a more specific example of a computing device 200. The computing device 200 may be any type of computing device that may include two or more processors. As shown, the computing device 200 comprises a first processor 202 and a second processor 204. In one embodiment, the first processor 202 is the main processor. To this end, in one embodiment, it may be preferable to run processes that utilize most or all of their timeslices on the first processor 202. This may help keep the first processor 202 running at full capacity when actively processing a particular process. In one embodiment, the first processor 202 operates at a higher voltage than the second processor 202.

The second processor 204 may be a processor consumes less power than the first processor 202. In one embodiment, this lower power second processor 204 may also run at a slower speed than the first processor 204.

The computing device 200 may also include a scheduler 206. The scheduler 206 is configured to assign processes from the request queue 208 to either the first processor 202 or the second processor 204.

According to one embodiment, the scheduler 206 may be configured to assign processes that utilize less power than other processes to the second processor 204. Spin lock processes or so called sleeper processes may, in one embodiment, always or almost always be assigned to the second processor 206. This is due, at least in part, to the fact that both of these types of processes do not fully utilize either the processing capability of a high speed processor or the full time slice allotted to them. For example, a sleeper process may only utilize a portion of its time slice, surrendering its remaining allocated time slice in trade for a future sleeper bonus as is referred to in the art. As these processes do not fully utilize the first processor 202, they may be assigned to the second processor 204. It will be understood that a programmer may indicate in code whether a particular process should be assigned to the slower processor. Another way in which the scheduler 206 may assign processes is based on historical records of whether a particular process frequently spun while acting on a spinlock or included a sleeper bonus. If so, the scheduler may assign such processes to the second processor 204.

In one embodiment, the second processor 204 may include a subset of the general purpose instructions stored on other, faster processors in the system (for example, the first processor 202). In one embodiment, this subset may include general purpose instructions such as atomic test and set instructions or additional instructions not kept on the primary processor. In addition, the second processor 204 may include registers for storing data.

In one embodiment, the first 202 and second processors 204 may include programs or hardware configured to determine the power usage of the processor. This data may be stored, for example, in the processors (202 and 204) or otherwise made available to the scheduler 206 and or any userspace processes as needed.

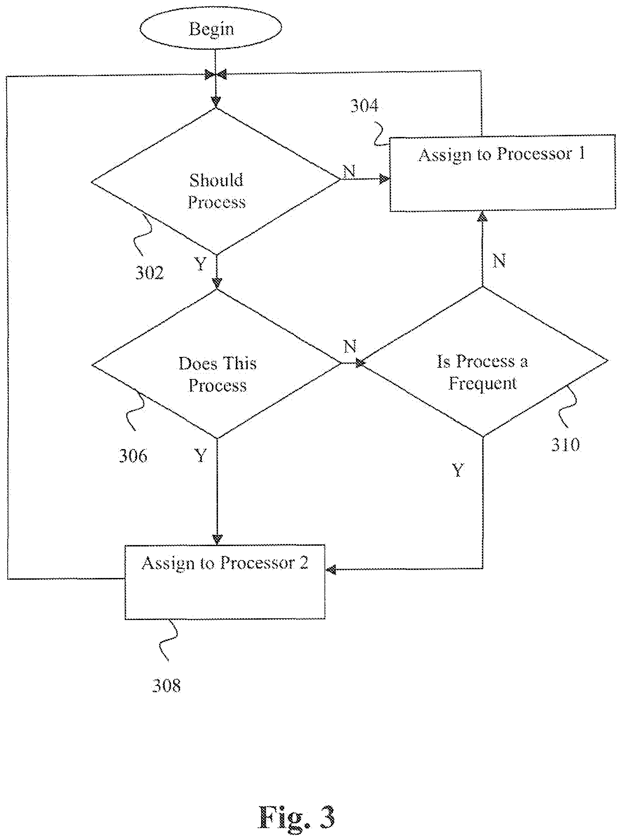

Fig. 3 is a flow chart showing a method by which the scheduler 206 (Fig. 2) may determine which of the processors (faster or slower) to assign a particular process. The process begins at a block 302 where the next process in the request queue is examined to determine if it is a process which might be more optimally executed on a specialty processor. This determination may involve examining a table or other type of record that contains an indication of whether the process is a high or low power consumer (as inferred from the utilization of processor time to accomplish program instruction execution which is not bus waiting as known in the art). The contents of the table or other record may include an indication created at compile time for the process if such was indicated and is supported by the scheduler. That is, the programmer could force the process to one or the other processor at design time by indicating the choice in the software. This may be done, for example, by including special instructions in the software capable of informing a compiler that a section or region or code is optimally executed on either the first or second processor. Of course, the table could be created and populated by the scheduler itself based on historical data. For example, if a process is regularly providing a sleeper bonus or behaving as a spin lock process, that process could be tagged as being assigned to the slower processor.

In the event that the process is not a process to be executed on a specialty processor (i.e., the coding or history indicate it should run on the fastest processor) at a block 304 it is assigned to processor 1. That is, in the event the process has been determined not to frequently obtain spinlocks, has not been identified as a frequent sleeper, or other candidate process which is more optimally executed on a low power processor with respect to power savings it is assigned to the faster first processor at a block 304. Operation in the first processor is then carried out in the normal manner. That is, assignment of the process does not, in one embodiment, affect how the process is operated on by the processor to which it is assigned. Otherwise, processing progresses to a block 306.

In the event that the process is not to already marked as to be executed on a special processor, at a block 306 it is determined whether the process frequently obtains a spinlock. This determination may be made in several ways. For example, the compiler may be able to determine that the process requests as asset and then does not release the asset until a certain response is received by examining the language constructs or application programming interface (API) used by the programmer. Alternatively, the scheduler could determine, based on historical data, that the process ties up a particular assert for extended time periods while not performing any other processing. Furthermore, during execution of the process it may be determined that the process is spinning/waiting for a spinlock that is not immediately available, that process may "become" a spinlock process. To that end, block 306 may continually monitor each executing process to determine if the process has become a special process. In such a case, a previously started process may be moved from the first processor to the second processor or vice versa. Of course, one of ordinary skill will realize that care must be taken to avoid bouncing a single process between the processor multiple times as it changes state.

Regardless, if the process is a spin lock process, it is assigned to the second processor at a block 308. In the event that the process is not a spin lock process, at a block 310 it is determined whether the process has a sleeper bonus. This may be determined, as described above, by either programmer indication, historical review or by monitoring the execution of the process in real time. Regardless, if the process has an associated sleeper bonus it is assigned to the second processor at block 308. Otherwise, the process is assigned to the first processor at block 304. It should be understood that the scheduler may require a consistent sleeper bonus from a particular process before it may determine that it should be assigned to the second processor. Furthermore, once assigned, the process may always be so assigned until it displays a history of not providing a sleeper bonus.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one ore more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated

The flow diagrams depicted herein are just one example. There may be many variations to this diagram or the steps (or operations) described therein. For instance, the steps may be performed in a differing order or steps may be added, deleted or modified. All of these variations are considered a part of the claimed invention.

## Claims

1. A computing device comprising:
a first processor (202) configured to operate at a first speed and consume a first amount power;
a second processor (204) configured to operate at a second speed and consume a second amount of power, wherein the first speed is greater than the second speed and the first amount of power is greater than the second amount of power; and
**characterised by** a scheduler (206) for assigning processes to the first processor only if the processes utilize their entire timeslice, comprising examining a request queue to determine utilization of processor time to accomplish program instruction execution, the examining comprising determining whether a process is now or continues to operate as a spinlock process, a process with a sleeper bonus, or another type of process; and
assigning the process to the second processor in the event that the process is a spinlock process or a process with a sleeper bonus, otherwise, assigning the process to the first processor.

2. The computing device of either of the preceding claims, wherein the first processor (202) comprises a set of general purpose instructions and the second processor (204) comprises a subset of the general purpose instructions.

3. The computing device of any of the preceding claims, wherein the second processor (204) comprises a subset of general purpose instructions suitable for minimally supporting the types of process executing on them, such as atomic test and set instructions.

4. The computing device of any of the preceding claims, wherein the process comprises an indication that the process should be assigned to the second processor (204) and wherein the scheduler (206) is further operable for assigning the process to the second processor.

5. A method of assigning processes to a first processor (202) or a second processor (204) in a multiprocessor computing device, the method comprising:
ascertaining that the first processor operates faster and consumes more power than the second processor;
determining whether a process is now or continues to operate as a spinlock process, a process with a sleeper bonus, or another type of process; and
assigning the process to the second processor in the event that the process is a spinlock process or a process with a sleeper bonus, otherwise, assigning the process to the first processor.

6. The method of claim 5, wherein determining comprises monitoring the process each time it runs and storing the power consumption during the time that it runs.

7. The method of either of claims 5 or 6, wherein determining comprises receiving an input from a compiler program.

8. The method of any of claims 5 to 7, wherein the first processor (202) comprises a general instruction set and the second processor (204) comprises a subset of the general instruction set.

9. The method of any of claims 5 to 8, wherein the second processor (204) comprises registers and atomic test and set instructions.

10. A computer program stored on a computer readable medium and loadable into the internal memory of a digital computer, comprising software code portions, when said program is run on a computer, for performing the method of any of claims 5 to 9.

## Patentansprüche

1. Datenverarbeitungseinheit, die umfasst:
einen ersten Prozessor (202), der zum Betrieb mit einer ersten Geschwindigkeit und Verbrauchen eines ersten Energiebetrags eingerichtet ist;
einen zweiten Prozessor (204), der zum Betrieb mit einer zweiten Geschwindigkeit und Verbrauchen eines zweiten Energiebetrags eingerichtet ist, wobei die erste Geschwindigkeit größer als die zweite Geschwindigkeit und der erste Energiebetrag größer als der zweite Energiebetrag sind; und
**gekennzeichnet durch** eine Planungseinheit (206) zum Zuweisen von Prozessen an den ersten Prozessor nur, wenn die Prozesse ihren gesamten Zeitsektor nutzen, was ein Untersuchen einer Anforderungswarteschlange zum Ermitteln der Verwendung von Prozessorzeit zum Ausführen der Programm-Anweisung umfasst, wobei das Untersuchen ein Ermitteln umfasst, ob es sich bei einem Prozess momentan um einen Spinlock-Prozess, einen Prozess mit einem Schläferbonus oder eine andere Prozessart handelt oder er weiter als solcher betrieben wird; und
Zuweisen des Prozesses an den zweiten Prozessor, falls es sich bei dem Prozess um einen Spinlock-Prozess oder um einen Prozess mit Schläferbonus handelt, andernfalls Zuweisen des Prozesses an den ersten Prozessor.

2. Datenverarbeitungseinheit nach einem der vorhergehenden Ansprüche, wobei der erste Prozessor (202) einen Satz von Universal-Anweisungen und der zweite Prozessor (204) einen Teilsatz der Allgemeinzweck-Anweisungen umfassen.

3. Datenverarbeitungseinheit nach einem der vorhergehenden Ansprüche, wobei der zweite Prozessor (204) einen Teilsatz von Universal-Anweisungen umfasst, die für die geringstmögliche Unterstützung der an ihnen ausgeführten Prozessarten geeignet sind, wie z.B. atomare Test-und-Set-Anweisungen.

4. Datenverarbeitungseinheit nach einem der vorhergehenden Ansprüche, wobei der Prozess eine Angabe umfasst, dass der Prozess an den zweiten Prozessor (204) zugewiesen werden muss, und wobei die Planungseinheit (206) ferner funktionell in der Lage ist, den Prozess an den zweiten Prozessor zuzuweisen.

5. Verfahren zum Zuweisen von Prozessen an einen ersten Prozessor (202) oder einen zweiten Prozessor (204) in einer Mehrprozessor-Datenverarbeitungseinheit, wobei das Verfahren umfasst:
Feststellen, dass der erste Prozessor Operationen schneller ausführt und mehr Energie verbraucht als der zweite Prozessor;
Ermitteln, ob es sich bei einem Prozess momentan um einen Spinlock-Prozess, einen Prozess mit einem Schläferbonus oder eine andere Prozessart handelt oder er weiter als solcher ausgeführt wird; und
Zuweisen des Prozesses an den zweiten Prozessor, falls es sich bei dem Prozess um einen Spinlock-Prozess oder einen Prozess mit Schläferbonus handelt, andernfalls Zuweisen des Prozesses an den ersten Prozessor.

6. Verfahren nach Anspruch 5, wobei, wenn ein Prozess ausgeführt wird, das Ermitteln stets ein Überwachen des Prozesses und Speichern des Energieverbrauchs während seiner Laufzeit umfasst.

7. Verfahren nach einem der Ansprüche 5 oder 6, wobei das Ermitteln ein Empfangen einer Eingabe von einem Compilerprogramm umfasst.

8. Verfahren nach einem der Ansprüche 5 bis 7, wobei der erste Prozessor (202) einen allgemeinen Anweisungssatz und der zweite Prozessor (204) einen Teilsatz des allgemeinen Anweisungssatzes umfassen.

9. Verfahren nach einem der Ansprüche 5 bis 8, wobei der zweite Prozessor (204) Register und atomare Test-und-Set-Anweisungen umfasst.

10. Computer-Programm, das auf einem für einen Computer lesbaren Medium gespeichert ist und in den internen Speicher eines Digitalcomputers geladen werden kann, wobei das Computer-Programm Software-Code-Abschnitte zum Durchführen des Verfahrens nach einem der Ansprüche 5 bis 9 umfasst, wenn das Programm auf einem Computer ausgeführt wird.

## Revendications

1. Unité informatique comprenant :
un premier processeur (202) configuré pour fonctionner à une première vitesse et consommer une première quantité de puissance ;
un second processeur (204) configuré pour fonctionner à une seconde vitesse et consommer une seconde quantité de puissance, la première vitesse étant supérieure à la seconde vitesse et la première quantité de puissance étant supérieure à la seconde quantité de puissance ; et
**caractérisé par** un programmateur (206) pour assigner des processus au premier processeur seulement si les processus utilisent leur intervalle de temps entier, comprenant d'examiner une file d'attente de demande pour déterminer l'utilisation du temps de processeur afin d'accomplir une exécution d'instruction de programme, l'examen comprenant de déterminer si un processus est en cours ou continue à fonctionner comme un processus de verrou avec scrutation, un processus avec un bonus de cellule dormante ou un autre type de processus ; et
assigner le processus au second processeur au cas où le processus est un processus de verrou avec scrutation ou un processus avec un bonus de cellule dormante, assigner le processus au premier processeur.

2. Unité informatique selon l'une ou l'autre des revendications précédentes, dans le premier processeur (202) comprenant un ensemble d'instructions à usage général et le second processeur (204) comprenant un sous-ensemble d'instructions à usage général.

3. Unité informatique selon l'une quelconque des revendications précédentes, le second processeur (204) comprenant un sous-ensemble d'instructions à usage général appropriées pour une prise en charge minimale des types de processus s'exécutant sur eux, comme un test atomique et des instructions réglées.

4. Unité informatique selon l'une quelconque des revendications précédentes, le processus comprenant une indication que le processus devrait être assigné au second processeur (204) et le programmateur (206) étant en outre opérationnel pour assigner le processus au second processeur.

5. Procédé d'assignation de processus à un premier processeur (202) ou un second processeur (204) dans une unité informatique multiprocesseurs, le procédé comprenant de :
certifier que le premier processeur fonctionne plus rapidement et consomme plus de puissance que le second processeur ;
déterminer si un processus est en cours ou continue à fonctionner comme un processus de verrou avec scrutation, un processus avec un bonus de cellule dormante ou un autre type de processus ;
assigner le processus au second processeur au cas où le processus est un processus de verrou avec scrutation ou un processus avec un bonus de cellule dormante, assigner le processus au premier processeur.

6. Procédé selon la revendication 5, dans lequel la détermination comprend de surveiller le processus chaque fois qu'il s'exécute et mémoriser la consommation de puissance pendant le temps qu'il s'exécute.

7. Procédé selon l'une ou l'autre des revendications 5 ou 6, dans lequel la détermination comprend de recevoir une entrée provenant d'un programme de compilateur.

8. Procédé selon l'une ou l'autre des revendications 5 à 7, dans lequel le premier processeur (202) comprend un ensemble d'instructions générales et le second processeur (204) comprend un sous-ensemble de l'ensemble d'instructions générales.

9. Procédé selon l'une quelconque des revendications 5 à 8, dans lequel le second processeur (204) comprend des registres et un test atomique et des instructions réglées.

10. Programme informatique mémorisé sur un support lisible par ordinateur et chargeable dans la mémoire interne d'un ordinateur numérique, comprenant des portions de code de programme, lorsque ledit programme est exécuté sur un ordinateur, pour mettre en oeuvre le procédé selon l'une quelconque des revendications 5 à 9.
